(19) **Europäisches Patentamt / European Patent Office / Office européen des brevets**

(11) **EP 4 650 723 A1**

(12) # EUROPEAN PATENT APPLICATION

(43) Date of publication:
**19.11.2025 Bulletin 2025/47**

(21) Application number: **24176391.1**

(22) Date of filing: **16.05.2024**

(51) International Patent Classification (IPC):
**G01D 5/353** (2006.01)    **G01N 21/77** (2006.01)

(52) Cooperative Patent Classification (CPC):
**G01N 21/774; G01D 5/35316; G01L 1/24;**
G01N 2021/7716; G01N 2021/7723;
G01N 2021/7776; G01N 2021/7779

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Nederlandse Organisatie voor toegepast-natuurwetenschappelijk Onderzoek TNO**
**2595 DA 's-Gravenhage (NL)**

(72) Inventors:
- **CHENG, Lun-Kai**
**2595 DA's-Gravenhage (NL)**
- **XU, Man**
**2595 DA's-Gravenhage (NL)**

(74) Representative: **V.O.**
**P.O. Box 87930**
**2508 DH Den Haag (NL)**

(54) **OPTICAL SENSOR SYSTEM FOR DETECTION OF A CHEMICAL SUBSTANCE**

(57)    The invention is directed at an optical sensor system for detecting a chemical substance. A fiber grating sensor responsive to the substance comprises a grating to reflect or transmit optical radiation at a reflection/transmission wavelength. The sensor comprises a radiation source, an interferometer, and an optical conveyance structure configured for conveying the interrogation signal to the fiber grating sensor. The interferometer provides a combined interference signal to at least three output ports of a coupler. Each of the at least three output ports thereby provides a respective output signal, wherein a fixed mutual phase difference is present between each two output signals. The fiber grating sensor comprises a surface coating forming an exterior casing, the surface coating being of a material that is mechanically responsive to the presence of the chemical substance ambient thereto.

Fig. 1

**Description**

Field of the invention

The present invention is directed at an optical sensor system for detection of a chemical substance, the optical sensor system comprising a fiber grating sensor responsive to the chemical substance being present ambient to the fiber grating sensor, wherein the fiber grating sensor comprises a fiber section including an internal structural periodicity such as to reflect, upon receiving an optical interrogation signal in use, optical radiation at a reflection wavelength that is dependent on the internal structural periodicity, and wherein the optical sensor comprises a radiation source for illuminating the fiber grating sensor with an optical interrogation signal, an interferometer, and an optical conveyance structure, wherein the optical conveyance structure is configured for conveying the optical interrogation signal to the fiber grating sensor and for conveying the optical output signal from the fiber grating sensor to the interferometer.

Background

In view of its promising properties in terms of environmental load, hydrogen increasingly becomes a favorite alternative to hydrocarbons in order to enable replacement of older technologies with newer environmental friendly ones. A major advantage of hydrogen is that it provides a powerful source of energy, even more powerful than many hydrocarbons, while merely producing water vapour upon combustion. Hydrogen is likewise very suitable for use in fuel cells for the same reasons.

However, traditionally, hydrogen has not been the fuel of choice in many older technologies because the associated safety hazards. The present technological developments stimulated by the need for durable and environmental friendly solutions, ask for effective solutions to these safety hazards. In line with the above advantages of hydrogen, it is a highly explosive substance. To the foundation of implementing safety solutions around hydrogen usage, is the possibility detect the presence of hydrogen accurately, reliably and efficiently. This not only applies to hydrogen, but more generally to the detection of many kinds of chemical substances that to a more or lesser extent provide safety hazards in the use thereof.

Various methods and systems for sensing the presence of hydrogen are already available. Some of these methods rely on the application of a layer of palladium (or comprising palladium), the properties of which are known to change in the presence of hydrogen. Palladium is known to absorb hydrogen very well, forming palladium hydride which is an alloy consisting of two crystalline phases, $\alpha$ and $\beta$. The properties thereof are highly dependent on the absorbed amount of hydrogen, causing a number of material properties and characteristics of the layer to change. For example, the volume of the layer, its electrical properties, and various mechanical properties change as a result of absorption of hydrogen. This principle is used in various ways for the detection of hydrogen.

In some of these detection methods, a palladium layer is applied to an optical detector in order to detect hydrogen by optically detecting changes in the palladium detection material. Known sensors of this type, although able to perform a reliable detection, in most cases are relatively slow. This renders the measurements, although being accurate, rather slow and inefficient. As may be appreciated, with hydrogen being a colorless and odorless, but highly explosive substance, an efficient and accurate detection method is important in order to prevent dangerous situations.

Although the present document includes references to various other documents, no admission is made that any reference constitutes prior art. The discussion of references refers to their content as presented therein, and does not acknowledge nor confirm the accuracy or pertinency thereof. It will be understood that, although a number of prior art publications may be referred to herein, this reference does not constitute an admission that any of these documents form part of the common general knowledge in the art in any country.

Summary of the invention

The present document relates to the detection of the presence of specific chemical substances. Although primarily directed at detection of hydrogen, the presently described methods and systems are certainly not limited to this field of application, and may likewise be applied in order to detect other chemical substances with a higher sensitivity and/or a quicker response. It is an object of the present invention to provide an optical sensor system for detection of a chemical substance, which operates reliably, accurately and efficiently.

To this end, there is provided herewith an optical sensor system for detection of a chemical substance, the optical sensor system comprising a fiber grating sensor responsive to the chemical substance being present ambient to the fiber grating sensor, wherein the fiber grating sensor comprises a fiber section including an internal structural periodicity such as to reflect, upon receiving an optical interrogation signal in use, optical radiation at a reflection wavelength that is dependent on the internal structural periodicity, and wherein the optical sensor comprises a radiation source for illuminating the fiber grating sensor with an optical interrogation signal, an interferometer, and an optical conveyance structure, wherein the optical conveyance structure is configured for conveying the optical interrogation signal to the fiber grating sensor and for conveying the optical output signal from the fiber grating sensor to the interferometer, wherein the interferometer is configured for splitting the optical output signal into at least a first signal fraction and a second signal fraction, and wherein the interferometer is configured for conveying the first and second signal fraction such as to establish a path length difference between the first signal fraction and the second signal fraction, and wherein the interferometer comprises a coupler unit which is configured for combining the first and second signal fraction into a combined interference signal, and for providing the combined interference signal to at least three output ports of the coupler unit, such that each of the at least three output ports thereby provides a respective output signal such as to yield at least three output signals, wherein a fixed mutual phase difference is present between each two output signals of the at least three output signals; and wherein the fiber grating sensor, for being responsive to said chemical substance, at least at the fiber section including the internal structural periodicity comprises a surface coating forming an exterior casing, the surface coating being of a material that is mechanically responsive to the presence of the chemical substance ambient thereto.

In the invention, a fiber grating sensor coated with a surface layer of a material that is mechanically responsive to the presence of the chemical substance is applied, which is interrogated with a multi-port interferometer. The combination of a fiber grating sensor and a responsive coating layer provides an accurate measurement, and in combination with a multi-port interferometer enables to provide an efficient measurement. In particular, the use a three port interferometer enables to reduce the noise level with about a factor hundred in comparison with conventional scanning wavelength based interrogation methods for fiber grating sensors. Therefore, the accuracy of detecting wavelength shifts in the fiber grating sensor's output signal is significantly improved, enabling to detect even smaller and much more subtle changes. This, in turn, allows the detection of any changes in the properties of the coating material to become more efficient as well, and thus the sensor system is able to signal such changes much faster. One of the reasons for this is that the thickness of the surface coating can be kept much smaller than in conventional detector systems, resulting in the changes in material properties to become more significant in less time (the amount of bulk material is smaller). Another reason for this efficiency is, as may be appreciated, the much lower noise level in the three port interferometer, which allows to detect more subtle and less significant changes by providing a better signal-to-noise ratio (SNR).

In accordance with invention, the presence of a chemical substance is detected on the basis of changes in an optical output signal from a fiber grating sensor (such as a fiber Bragg grating). Fiber grating sensors consist of a fiber wherein a periodic structure of refractive index variations having an as accurate as possible constant periodicity is present. Upon illuminating the fiber grating sensor, the structural periodicity causes one wavelength (in fact a bandwidth of wavelengths around this one wavelength) that matches the periodicity (i.e. periodic length of each structural period) to be reflected by the grating whilst the remaining wavelengths of the optical radiation are transmitted. Putting the sensor under longitudinal strain will cause the grating periodicity to change, in the sense that the force exerted on the grating will cause the grating structure to be stretched or compressed. The result thereof will be that the reflected wavelength will shift, i.e. shorten upon compressing the fiber grating sensor and extend upon stretching the fiber grating sensor. This enables the accurate detection of all kinds of physical parameters, such as strain or temperature.

In the present invention, a fiber grating sensor is used onto which a surface coating has been applied. The surface coating comprises or is formed of a material that is mechanically responsive to the presence of the chemical substance ambient thereto. For example, the material may be receptive to the chemical substance and/or absorb (fraction of) the chemical substance, which in turn causes material properties and layer properties of the surface coating (such as the volume or hardness of the surface coating to change) and thereby cause mechanical response to the presence of the chemical substance. This mechanical response will change the strain in the fiber and thereby result in a change in wavelength of the output signal. The increased accuracy of the three port (or multi-port) interferometer will result in an early detection of the presence of the chemical substance.

In various proposed implementations, the fiber grating sensor (or one of the fiber grating sensors) of an optical sensor system is a phase shifted type fiber grating sensor wherein the internal structural periodicity comprises an interruption thereof, the interruption being provided by a deviation in at least one structural period, such as to enable the fiber grating sensor to transmit, upon receiving the optical interrogation signal, at least one fraction of the reflected optical radiation, wherein the at least one fraction comprises optical radiation in a transmission spectral bandwidth around a transmission wavelength that corresponds with the interruption. A phase shifted type fiber grating sensor, such as a phase shifted type fiber Bragg grating (PS-FBG), further increased the sensitivity, accuracy and response time of the system by further reducing the noise level in the interferometer system to measure the change in the transmission wavelength. Using a PS-FBG, for example, the wavelength bandwidth in the optical output signal of the fiber sensor grating may be further reduced, by only analyzing the transmitted fraction that comprises the optical radiation in the transmission spectral bandwidth around the transmission wavelength that corresponds with the interruption. Therefore only a very narrow spectral bandwidth will be received by the interferometer, which even further reduces the phase noise equivalent wavelength change noise in the interferometer by increasing the wavelength to interferometer phase scale factor.

In a phase shifted type fiber grating sensor, the internal structural periodicity comprises an interruption or defect resulting in a phase shift of the internal periodic structure. The interruption or defect is provided by a deviation in at least one structural period. The result of this is that the reflection spectrum of the fiber grating sensor has a narrow and deep reflection notch, because it selectively transmits (rather than reflects) a sharply defined wavelength somewhere within the reflection spectral bandwidth. At the same time, the transmitted fraction of the reflected optical radiation forms a sharp peak within a transmission spectral bandwidth around a transmission wavelength that corresponds with the interruption. The spectral bandwidth of the transmitted fraction is very small, much smaller than the spectral bandwidth of the reflection spectrum (typically a factor 10-100, where the reflection spectral bandwidth may be around 100 picometer and the transmission spectral bandwidth of the peak is around 10-1 picometer, dependent on the exact design of the grating with the interruption).

The use of a phase-shifted fiber grating sensor, as in these described variants of the described class of optical sensor systems which are the subject of this document, enables to obtain a signal having a very small spectral bandwidth. Instead of using the full reflective spectrum for measurement, only the sharply defined wavelength that is significantly diminished in the reflective spectrum, but which is present in the transmission spectrum of the phase-shifted fiber grating sensor, is used for performing the measurements. Therefore, as a result the coherence length is greatly increased by the smaller wavelength bandwidth and therefore the optical path length difference in the detection interferometer may be much larger. This provides a larger wavelength-to-phase scale factor for the interference signal, and thus smaller wavelength differences will become measurable using an interferometric interrogation system with the same phase noise level. Hence, by using a phase-shifted fiber grating sensor (and in particular the transmitted wavelength that is absent in the reflective spectrum of the sensor) the wavelength resolution (the smallest possible wavelength shift that is still measurable) is significantly improved. Thereby, a very high measurement resolution and highly accurate measurement of strain or pressure on a phase-shifted fiber grating sample, both statically and dynamically, is achieved.

In various embodiments of the described optical sensor systems, the chemical substance comprises hydrogen and the coating material comprises palladium. As already described above, palladium is highly receptive to absorbing hydrogen in a reversible manner in order to form an alloy type substance known as palladium hydride consisting of two crystalline phases, $\alpha$ and $\beta$. The properties thereof are highly dependent on the absorbed amount of hydrogen (i.e. the $\alpha$-to-$\beta$ ratio), causing a number of material properties and characteristics of the layer to change. In combination with the above described type of optical sensor systems, the application of palladium (or a suitable palladium containing substance) as the material of the surface coating of the fiber grating sensor will provide a highly efficient and accurate hydrogen detector.

In various examples of the optical sensor systems which are the subject of this document, the coupler unit comprises a plurality of N output ports, wherein N is an integer number greater than two, the coupler unit being configured for providing the combined signal each of the plurality of N output ports for providing a corresponding number of N output signals, wherein a fixed mutual phase difference is present between each two output signals of the plurality of N output signals. In the above, it has been explained how the application of a three port interferometer decreases the noise level and thereby increases the sensitivity and efficiency of the sensor systems described. This effect may be further enhanced by using more than three ports. Although increasing the number of ports likewise increases the computational load on an analyzer system that converts the measurements into sensor signal, the number of ports can be increased to a certain extend without the analysis becoming unmanageable. Furthermore, keeping in mind that the computational capacity of computing systems continuously grows with Moore's law, it may be appreciated that with the progress of technology there is no real limit on the number of output ports N of the interferometer. Further to the above, it is to be mentioned that a 2x2 interferometer will likewise provide a high sensitivity. However, because the interference signal is equivalent to $A * (1+V * \cos(\varphi))$, for a 2x2 interferometer with two outputs the calculation of $\varphi$ is subjected to changes and/or noise in the amplitude A and the visibility V of the interference signal. Using a 2x2 interferometer is thus possible in embodiments of the invention, as long as the above may be resolved in a different manner by additional arrangements.

For state of the art palladium coated fiber grating sensor, a coating thickness of 500 nanometers is typically required to generate sufficient strain on the fiber grating for a detectable wavelength shift measurement using standard fiber grating interrogation systems. In some examples of the proposed optical sensor system, the surface coating has a thickness of at most 300 nanometers; preferably a thickness of at most 200 nanometers; more preferably a thickness of less than 100 nanometers, such as 50 nanometers. This layer thickness may even be smaller than this dependent on the various properties of the system described above. In some or further examples of an optical sensor system as described in this document, the coupler unit has a plurality of N output ports, wherein N is an integer number greater than two.

In the light of the above, it is to be noted that in conventional methods and systems that rely on the application of a layer of palladium (or comprising palladium), a layer thickness of typically or larger than 500nm and even larger than 1000nm is applied in order to generate sufficient strain on the fiber grating for a detectable wavelength shift measurement using standard measurement systems. The large thickness renders the detection method to be slow in response time. For this reason, because in the abovementioned implementations of the concept described in this document a much smaller layer thickness (e.g. of 50nm) may be achieved, the detection methods are much faster.

Furthermore, in some exemplary optical sensor system described herein, the fiber grating sensor, at least at the fiber section including the internal structural periodicity, comprises one or more further coating layers such that the further coating layers and the surface coating together form the exterior sensing coating, each of the one or more further coating layers being of a further material that is mechanically responsive to an ambient parameter. For example, the further coating layers may enable to be responsive to temperature, pressure, vibrations or optical signals of a certain wavelength.

In certain variants of an optical sensor system in accordance with the type of optical sensor systems described here, the ambient parameter is at least one of a group comprising: temperature, motion energy, vibration energy, pressure, heat, or concentration or presence of the chemical substance or a further chemical substance. For example, the detection of a chemical substance, such as hydrogen, may coincide with other noticeable or potential changes in the environment of the sensor. Therefore, adding this detection capability to the optical sensors systems of the embodiments of the invention will be advantageous in the use thereof for various purposes.

Where, as described herein before, the optical sensor systems in accordance with some variants thereof are suitable for sensing hydrogen as the chemical substance of interest and wherein the coating material comprises palladium; in accordance with some examples the coating material comprises a structure suitable for providing an enhanced hydrogen absorption capacity, such as at least one of: a molecular nanostructure, a porous structure, a hydrogen attractive structure or surface. As may be appreciated, this will render the material property changes and layer property changes to become more robust or pronounced, and hence add on to the long term stability, accuracy, efficiency and sensitivity of the sensor system.

In some examples of the optical sensor systems described here, the radiation source is a broadband light source. This could be any suitable broadband light source. In some specific implementations thereof the broadband light source is a mode locked laser, or a broadband light source adapted or configured to provide a frequency comb signal. In this latter class of implementations, the noise level of in the interferometer is even further reduced as a result of the presence of a number of clearly defined equidistant frequencies resulting in corresponding discrete wavelengths. For example, in certain preferred variants of sensor arrangements, the radiation source comprises a mode locked laser. The plurality of discrete wavelengths provides a frequency comb signal. The application of a frequency comb signal as interrogation signal reduces the amount of phase noise in the output signal considerably due to the reduction of the beat noise between the wavelengths in the output spectrum of the grating sensor, and therefore further adds to the accuracy of the sensor arrangement. A mode locked laser conveniently provides design freedom in wavelength and interval, for example in some cases to provide a frequency comb signal having tunable characteristics, such as a tunable mode locking wavelengths or tunable wavelength interval. However, some exemplary sensor arrangements may advantageously apply different manners of providing a frequency comb signal, without departing from the present concept, and thereby providing a different way of applying an optical radiation signal comprising optical radiation at a plurality of discrete wavelengths, wherein the plurality of discrete wavelengths with constant optical frequency difference, include at least three wavelengths overlapping with the spectral bandwidth of the fiber grating sensor. Examples of other manners of providing equidistant frequencies (i.e. a frequency comb) that may likewise be applied in some examples, are provided herewith. In some examples, this may be achieved by using two high-power lasers of slightly different frequency and transmit their beams simultaneously through a photonic-crystal fiber, in order to create a frequency comb by four-wave mixing. Furthermore, another example would be to use a continuous-wave laser of which the amplitude and/or phase would be modulated with an external modulator driven by a radio-frequency source. Therefore, different implementations are available to the skilled person, the mode-locked-laser being preferred for achieving a high density (in frequency domain) of equidistant wavelengths in a convenient implementation.

In some or further implementations of optical sensor systems as described in the present document, the internal structural periodicity of the phase shifted fiber grating sensor comprises two or more interruptions, including at least a first interruption in a first position along the fiber section and a second interruption in a second position along the fiber section, such as to enable the phase shifted fiber grating sensor to transmit, upon receiving the optical interrogation signal, at least a first fraction and a second fraction of the reflected optical radiation, the first fraction comprising optical radiation of a first wavelength being associated with the first interruption and the second fraction comprising optical radiation of a second wavelength being associated with the second interruption, and wherein the surface coating is present on the fiber section in the first position and absent on the fiber section in the second position. In this class of implementations, in addition to detecting the presence of the chemical substance, it is possible to monitor another ambient parameter, such as the temperature. The fiber section in the second position in these embodiments is not provided with a surface coating, and therefore is not responsive to the presence (or absence) of the chemical substance, but only to other parameters affecting the strain in the fiber grating sensor. These other parameters for example may be the temperature of the fiber, which may be assumed to correspond to the ambient temperature. As a result, the measurements performed using the coated fiber section in the first position, which are indicative of the presence (or absence) of the chemical substance, can be corrected for a temperature effect that could otherwise affect the reading of the sensor. To enable the first and second fractions to comprise optical radiation of a first and second wavelength (the first and second wavelength being different wavelengths), the two interruptions must have a different amount of change in the grating period. For example, one interruption could be size 0.3 times the original periodic distance and one interruption could be size 0.7 times the original periodic distance (i.e. the periodic distance of the grating structure periodicity). As will be appreciated, the factors 0.3 and 0.7 are merely examples, and may be freely selected by the skilled person.

In yet another class of implementations of the optical sensor system described herein, the fiber section comprised by the phase shifted fiber grating sensor is provided by a polarization maintaining optical fiber section, for enabling simultaneous measurement of: temperature; and strain, the strain being mechanically induced by the surface coating. A polarization maintaining optical fiber is characterized by birefringence in two optical polarization modes of the fiber with different optical properties and response to physical parameters affecting the fiber e.g. temperature and strain, and this may be used in combination with a phase shifted fiber grating sensor to perform measure two parameters simultaneously. The use of a polarization maintaining optical fiber provides for different effective refractive indexes in each polarization mode of the fiber. For this reason, for example a $\pi$-PS-FBG created in a polarization maintaining optical fiber likewise has two distinct transmission resonances. By measuring the wavelength shifts of both, on the basis of these measurements a set of equations can be solved for two parameters indicative of strain and temperature respectively. This, therefore, can be used for the simultaneous measurability of strain induced by the surface coating as well as the temperature.

In some examples of the optical sensor systems described here, the optical sensor system comprises a plurality of fiber grating sensors. The interferometer may be applied advantageously to obtain optical output signals of a plurality of fiber grating sensors, which enables to setup a sensor network or sensor array. For example, the sensor array may be applied to obtain a sensor system with which a plurality of hydrogen detectors is monitored, wherein each fiber grating sensor of the plurality of fiber grating sensors is provided by a fiber Bragg grating including a surface coating of palladium as described above. The various fiber grating sensors may be multiplexed by having different periodicities in their structure, i.e. having distinguishing reflective and transmission spectra. They may also be multiplexed in the time domain, e.g. by implementing an optical switch that illuminates the fiber grating sensors subsequently, or by interrogating the fiber grating sensors simultaneously with an optical pulse and providing each fiber grating sensor with its own distinguishing optical delay line. Various implementations may be considered, not limited to the described examples.

In some of these optical sensing systems, the surface coating is present on at least one of the fiber grating sensors and absent on at least one further fiber grating sensor of the fiber grating sensors, for enabling, using the at least one further fiber grating sensor, a measurement of temperature independent of the presence of the chemical substance. In this case, one of the fiber grating sensors which is not coated with a surface coating that is responsive to the presence of the chemical substance, may be used for sensing an ambient temperature or another parameter of interest.

In some other or further of these optical sensing systems, the plurality of fiber grating sensors form a sensor network. Herein, the optical sensor network comprises at least one optical splitter for splitting the optical interrogation signal onto a plurality of optical conveyor branches. Each optical conveyor branch comprises one or more fiber grating sensors of the plurality of fiber grating sensors. Each optical conveyor branch has an associated unique branch length for providing a unique branch delay for multiplexing the optical output signals conveyed by the optical conveyor branches in time. Suppose there are in total M branches in the system, with each branch $m$ (where integer $m = 1, 2, 3, .... M$) having an associated delay $\delta_m$, where for each two branches $m_1$ and $m_2$ the associated delays $\delta_{m1}$ and $\delta_{m2}$ it holds that $\delta_{m1} \neq \delta_{m2}$. Because the delays $\delta_m$ of each branch $m$ are known, the optical output signals provided by the fiber grating sensors simultaneously at time $t_0$ will be subsequently received from the various branches m at times $t_m = t_0 + \delta_m$ (where integer $m = 1, 2, 3, .... M$). Thus, the measurements performed by the fiber grating sensors simultaneously may be analyzed at the output of the interferometer subsequently at times $t_m$ dependent on the delay $\delta_m$ associated with the respective branch $m$.

In some other or further of these optical sensing systems, each fiber grating sensor of the plurality of fiber grating sensors, is configured for reflecting or transmitting an optical output signal at a unique optical output wavelength, for multiplexing the optical output signals in a wavelength domain. Here, wavelength dependent multiplexing is performed. Where desired, the skilled person will appreciate that the above multiplexing methods may be combined or performed separately. For example, in a system comprising a plurality of fiber grating sensors, some of these fiber grating sensors may operate at their own wavelengths, where others are located on a branch having its own associated delay, and yet others operate both at their own wavelengths and are located on a branch having its own associated delay.

In some of the above optical sensor systems described herein, the optical sensor system further comprises a wavelength filter for selectively enabling transmission of an optical output signal to the interferometer. This, however, is optional because signal separation may be implemented in a different manner as well. For example, it is possible to sweep the frequency (and thus wavelength) of the optical interrogation signal, such as to receive optical output signals from the various fiber grating sensors subsequently. In other implementations, the separation of optical output signals at various wavelength ranges may be performed to provide subsequent measurements may be performed at the output of the interrogator.

## Brief description of the drawings

The invention will further be elucidated by description of some specific embodiments thereof, making reference to the attached drawings. The detailed description provides examples of possible implementations of the invention, but is not to be regarded as describing the only embodiments falling under the scope. The scope of the invention is defined in the claims, and the description is to be regarded as illustrative without being restrictive on the invention. In the drawings:

Figure 1 schematically illustrates a variant of an optical sensor system as described herein;
Figure 2 schematically illustrates an example of a fiber grating sensor for use in an optical sensor system as described herein;
Figure 3 schematically illustrates an example of a fiber grating sensor for use in an optical sensor system as described herein;
Figure 4 schematically illustrates an example of a fiber grating sensor for use in an optical sensor system as described herein;
Figure 5 schematically illustrates a variant of an optical sensor system as described herein;
Figure 6 schematically illustrates a variant of an optical sensor system as described herein;
Figure 7 schematically illustrates a variant of an optical sensor system as described herein;
Figure 8A and 8B illustrate a reflected wavelength spectrum of a fiber Bragg grating;
Figure 9A and 9B illustrate a transmission wavelength spectrum of a phase shifted fiber Bragg grating.

Detailed description

Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise it will be understood that when a connection between structures or components is described, this connection may be established directly or through intermediate structures or components unless specified otherwise.

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise. Embodiments of the invention may be designated as 'embodiments', 'variants', 'examples', 'alternatives', 'implementations', 'versions' or similar wording. Such examples are part of the whole disclosure of the present document, and their relation to the described inventive concepts follows from the description and from what is understood from it by the skilled person. No description in this document has been included herein in absence of any relation to the invention.

Many of the below exemplary sensor arrangements apply fiber grating sensors, such as fiber Bragg gratings. Some of these examples illuminate these fiber Bragg gratings with a specific type of illumination source, for example in order to provide a frequency comb signal using a mode-locked-laser (MLL). Other examples apply a regular continuous wave optical source, such as a regular broadband light source. Yet in some examples, the fiber grating sensor applied is a phase shifted fiber Bragg grating, which is at least interrogated in transmission (i.e. the output signal transmitted by the phase shifted fiber Bragg grating is analyzed to detect wavelength shifts). Whether interrogation in transmission or in reflection, or even both, is preferred or applied, depends on the design choice made and in some cases on the specifics of the sensor arrangement. For example, when the fiber grating sensor applied is a phase shifted fiber Bragg grating, interrogation in transmission is certainly preferred in order to leverage the very small transmission bandwidth within the reflected signal spectral bandwidth of the fiber grating sensor. However, optionally the reflected signal may likewise be analyzed in addition to the transmission spectrum, in order to improve accuracy or for other reasons.

Furthermore, in this document reference is made to the term 'exterior casing', which in accordance with the described sensor systems refers to the (flexible or rigid) surface coating applied to the fiber section containing the periodic structure. The adjective 'exterior' has been added in order to distinguish the exterior casing, i.e. the surface coating, from a regular cladding of the fiber, the part of the fiber that surrounds the fiber core to enable the light guiding functionality of the fiber. In this document, the surface coating forms the mechanically responsive layer that is applied around the exterior of the fiber. In a fiber grating sensor that is based on a normal fiber containing a core and a cladding, the surface coating may be applied as an exterior casing on the surface of the fiber, and thus be applied on the outer side of the fiber cladding that encloses the core. In some embodiments, the fiber grating sensor may include a fiber section including a periodic structure, wherein the cladding has been partially or completely removed (e.g. by etching) from this fiber section such as to form an etched fiber Bragg grating (etched FBG). In such an etched FBG, the surface coating forming the exterior casing may be present directly on the outer side of this fiber section and hence replace the original cladding. Thus, the sensor systems described here are not limited to using fiber grating sensor where the surface coating forming the exterior casing is present on the regular cladding of the fiber, but it may also be present on a partially etched away part of the cladding, or even directly on the fiber core where desired. Furthermore, the surface coating does not have to be present all around the outer fiber surface, but may also be present on only a part thereof (such as to only partially enclose the outer fiber surface or partially extend along the length of the fiber section including the grating).

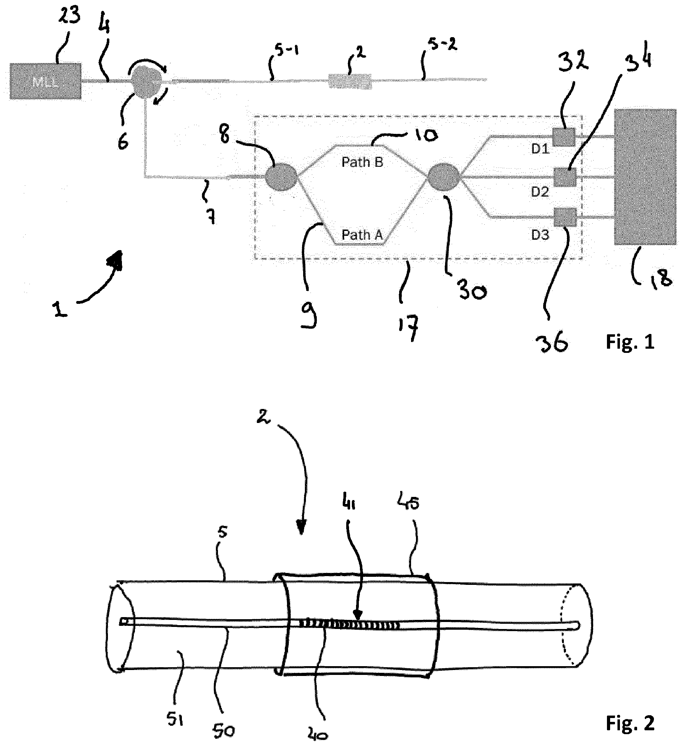

In figure 1, there is illustrated an optical sensor arrangement 1 for interrogating a fiber grating sensor 2. The fiber grating sensor may include for example any of: a fiber Bragg grating (FBG), long-period fiber grating, chirped fiber grating, tilted fiber grating, a sampled fiber grating or any other type of fiber grating sensor. The fiber grating sensor 2 is to be interrogated for determining a wavelength characteristic of an optical output signal obtained from the fiber grating sensor 2. Thereto, the fiber grating sensor 2 is operatively connected, using an optical conveyance structure including fibers 4 and 5-1 or other optical conveyors, to a radiation source 23. The spectrum of radiation source covers the spectrum of the optical output signal of fiber grating sensor 2. Radiation source 23 may be a single radiation unit or may comprise a system of radiation units. Radiation source 23 is of a type that is suitable to provide discrete wavelengths of radiation. For example radiation source 23 may comprise multiple radiation units in an arrangement, or may comprise other means suitable for providing a frequency comb signal. A frequency comb signal is a signal that includes a series of discrete wavelengths, for example these discrete wavelengths may include a precise and regular series of wavelengths that are equidistant in the frequency domain. Alternatively, the wavelengths may not be equidistant. These wavelengths are often generated using one or more lasers or a laser system, although the skilled person will recognize that there are other manners of providing a frequency comb signal.

The fiber grating sensor 2 comprises a fiber section, which includes an internal structural periodicity in order to reflect, upon receiving an optical interrogation signal in use, optical radiation at a reflection wavelength that is dependent on the internal structural periodicity. The fiber grating sensor 2 may for example be a fiber Bragg grating. A fiber Bragg grating is a fiber containing a fiber section including a periodic variation of the refractive index therein. The fiber Bragg grating reflects specific wavelengths of radiation while allowing other wavelengths to pass through in transmission. The periodic variation of the refractive index may be obtained by exposing the fiber to intense ultraviolet light in order to modify the refractive index of the core. Dependent on the periodicity of the structure and the profile of refractive index modulation, light incident on the grating will be reflected at a specific wavelength determined by the grating spacing and refractive index profile. A fiber Bragg grating is a particular type of fiber grating sensor 2 that may be applied in some examples. Other types of fiber grating sensors 2 may likewise be interrogated using an exemplary optical sensor arrangement 1 as illustrated.

Fiber grating sensors are applied in many different types of applications, often as sensors in order to measure certain physical parameters that are able (dependent on how the fiber grating sensors are applied in a setup) to modify the periodicity. For example, strain or compression can be measured using a fiber grating sensor 2 by attaching the fiber grating sensor 2 such that it is stretched or compressed along its length under influence of strain. Likewise, temperature changes in a given material will give rise to stretching or compression of a fiber grating sensor 2. Vibrations or other dynamic variations in structures may be accurately monitored using these sensors as well.

The optical sensor arrangement 1 comprises a radiation source 23 for illuminating the fiber grating sensor 2 with an optical interrogation signal. The fiber grating sensor 2 reflects a specific wavelength (or small wavelength range) back into fiber 5-1. The part of an optical signal that is transmitted by the fiber grating sensor 2 is void of the reflected wavelength, and is transmitted into fiber 5-2. In figure 1, the fiber grating sensor 2 is interrogated in reflection. Thereto, fiber 4 receives the optical input signal from radiation source 23, and transmits the optical input signal via optical circulator 6 to the fiber grating sensor 2 via fiber 5-1. The optical signal fraction reflected by the fiber grating sensor 2 is returned to the circulator 6 and forms the output signal of the fiber grating sensor in reflection. This optical signal fraction is received from fiber 5-1 by circulator 6, and transmitted to a fiber 7. Fiber 7 conveys the reflected optical radiation (i.e. the output signal in reflection) from fiber grating sensor 2 towards an interferometer 17 for measuring the change in the wavelength of the optical output signal of the fiber grating sensor 2.

The optical conveyance structure (5-1, 5-2, 7) is configured for conveying the optical interrogation signal to the fiber grating sensor 2 and for conveying the optical output signal (such as the reflected signal in fiber 5-1) from the fiber grating sensor 2 to the interferometer 17. Alternatively or additionally, in some examples, the optical sensor arrangement 1 may also be connected to the interferometer 17 in transmission. This is for example the case where the fiber grating sensor 2 is provided by, or includes or comprises, a phase shifted fiber Bragg grating. It is also possible that both the reflected signal in fiber 5-1 and the transmitted signal in fiber 5-2 are conveyed to an interferometer such as interferometer 17, in order to analyze both. This may provide a more accurate determination of the reflected wavelength.

The interferometer 17 applied in the present case is a three port Mach-Zehnder interferometer of phase shifting type, including three output ports 32, 34 and 36 through the use of a 3x3 type coupler unit 30. The interferometer 17 preferably is a fiber based interferometer, to which fiber 7 may readily be connected. Interferometer 17 of the example illustrated in figure 1 is a two branch, three port fiber based Mach-Zehnder interferometer. The interferometer 17 comprises an optical splitter 8. The optical splitter 8 is configured for splitting the optical output signal into a first signal fraction and a second signal fraction. The interferometer 17 includes a first branch 9 for conveying the first signal fraction and a second branch 10 for conveying the second signal fraction. The first branch 9 and the second branch 10 are of different length such as to provide a path length difference (optical path difference (OPD)), establishing a phase difference between the first signal fraction and the second signal fraction when arriving to combiner 30. The interferometer 17 further comprises a beam combiner or coupler unit 30. The combiner 30 combines the first and second signal fractions from the first branch 9 and second branch 10 into a combined interference signal. The combined signal is conveyed, from combiner 30 into three branches that convey the signals to respectively a first output 32, a second output 34 and a third output 36 which respectively connect to detectors (not individually illustrated). The signals received by the detectors connected to the outputs 32, 34 and 36 may be analyzed using analyzer system 18, for enabling determination of the wavelength characteristics by the analyzer 18. For example, although not limited thereto, the outputs of the interferometer 17 may have a fixed offset in phase. While the change in the phase $\phi$ of the interference signal caused by the wavelength shift is the same in all three the interferometer outputs 32, 34 and 36.

The radiation source 23 is configured for providing the optical radiation signal that is conveyed to the fiber grating sensor 2. Advantageously, although optional, the optical radiation signal is comprised of multiple wavelengths. For example, the optical radiation signal comprises optical radiation at discrete wavelengths, preferably a plurality of discrete wavelengths. As described above, the signal may comprise a frequency comb signal. The plurality of discrete wavelengths include at least three wavelengths overlapping with a reflected signal spectral bandwidth of the fiber grating sensor 2. As a result, the phase noise level in the optical output signal will be significantly reduced due to the reduction of the beat noise between different wavelengths. This in turn improves the signal-to-noise ratio: because the phase noise level is lower, smaller phase differences become visible. For example, the use of the frequency comb from an MLL results in a lower phase noise detectivity at the same visibility e.g. 0.5 of the interference signal. Reducing the spectral bandwidth of the light from the grating by using PS-FBG will enable the usage of longer OPD in the detection interferometer. Since with an OPD of approximately the coherence length of the light, the visibility is about 0.5. So, the PS-FBG will have the same visibility (0.5) corresponding phase noise level. Due to the longer OPD, the wavelength to phase scale factor is larger (see Eq. 1). For the same phase noise, a smaller wavelength shift can be detected.

Suppose that based on the periodic structure 41, the fiber grating sensor 2 reflects an optical signal with wavelength $\lambda_0$ under normal conditions, e.g. at a given temperature while the fiber grating sensor 2 is relaxed, i.e. neither stretched nor compressed, when it is illuminated by an optical signal that includes this wavelength. Stretching the fiber grating sensor 2 will increase the reflected wavelength, e.g. from $\lambda_0$ to $\lambda_1$. The change in the reflected wavelength $\Delta\lambda_{FBG} = |\lambda_1 - \lambda_0|$ of the fiber grating sensor 2 will result in a phase difference that is measurable from the interference signal in the branch detectors connected to outputs 32, 34 and 36 of the interferometer 17. The phase difference $\Delta\Phi$ is determined by the optical path difference OPD between branches 9 and 10, and by the wavelength $\lambda$ (say $\lambda = \lambda_0$, assuming that $\lambda_0 \gg \Delta\lambda_{FBG}$). In formula:

$$\Delta\phi = -\frac{2\pi \, OPD}{\lambda^2} \, \Delta\lambda_{FBG}$$

$$(\text{eq. 1})$$

As follows from the above, making the OPD longer increases the phase difference $\Delta\Phi$ and thereby the detectability for $\Delta\lambda_{FBG}$. However, increasing the OPD will also decrease the interferometric visibility V, which in turn determines the minimum detectable phase difference $\Delta\Phi_{min}$ of the system 1. Contributing to this, is that the phase noise level becomes larger at lower interferometric visibilities V. A further limit to the OPD is that in order to be able to measure the reflected optical signal from the fiber grating sensor 2, the OPD between branches 9 and 10 cannot be much larger than the coherence length. The coherence length is determined by the spectral bandwidth of the fiber grating sensor 2. Thus although there is a desire to increase the OPD to obtain a large phase difference, the OPD is restrained by several physically determined limits.

In system 1 of figure 1, the radiation source 23 applied provides an optical input signal that comprises optical radiation at a plurality of discrete wavelengths (e.g. a frequency comb). Due to the decreased level of phase noise in the interference signal, a lower phase difference $\Delta\Phi$ is measurable.

The application of a three port interferometer 17, as illustrated provides for a very accurate determination of the wavelength shift induced in the fiber grating sensor 2. The detectors D 1, D2 and D3 at the respective output ports 32, 34 and 36 in figure 1, each receive an optical signal with a time dependent intensity, respectively providing intensities $I_1$, $I_2$ and $I_3$. The time dependent intensities $I_1$, $I_2$ and $I_3$ of the interference signal according to the phase $\phi$ and the phase offset (of $2\pi/3$ for a three output ports interferometer) between the detectors 32, 34 and 36 is well defined. For example, in the 3x3 Mach-Zehnder interferometer illustrated in figure 1, the signals received are as follows:

$$I_1(t) = A_0 \left(1 + V \cos\big(\phi(t)\big)\right) \qquad \text{(eq. 2)}$$

$$I_2(t) = A_0 \left(1 + V \cos\left(\phi(t) + \frac{2\pi}{3}\right)\right) \qquad \text{(eq. 3)}$$

$$I_3(t) = A_0 \left(1 + V \cos\left(\phi(t) - \frac{2\pi}{3}\right)\right) \qquad \text{(eq. 4)}$$

$$\phi(t) = -\arctan\left(\sqrt{3}\,\frac{I_1(t)-I_2(t)}{2I_3(t)-I_1(t)-I_2(t)}\right) \qquad \text{(eq. 5)}$$

From the above, the influence of changes in optical power $A_0$ and visibility V can be effectively suppressed, enabling accurate measurement of the phase change caused by shift in wavelength $\Delta\lambda$. In Eq. 2, 3 and 4, $\phi(t)$ is related to the OPD and the wavelength change via Eq. 1. Therefore, the OPD is used as a scale factor. For the same phase noise level (and hence the same visibility), a smaller wavelength can be measured by an interferometer with a longer OPD. As a result of the low noise level in the interferometer 17 using the frequency comb, the accuracy is thus greatly improved which in accordance with the invention allows for a very efficient detector system for determining the presence of hydrogen. For example, as a result, the layer thickness of the palladium surface coating of the fiber Bragg grating 2 may be as small as 50 nanometer or even smaller. This greatly improves the response time of the coating layer.

Illustrated to figure 2, is an example of a fiber grating sensor 2 that may be applied in optical sensor systems 1 described herein. The optical sensor system 1 in some examples thereof applies a fiber grating sensor 2 of which a fiber section 40, which comprises an internal periodic variation 41 of the refractive index with a constant periodicity, is coated with a surface layer 45 of a material that is mechanically responsive to the presence of a chemical substance that is to be detected. For example, a surface coating layer 45 of palladium (or a palladium containing alloy or substance) will be mechanically responsive to the presence of hydrogen, and therefore may be applied in a sensor 2 that is configured for detecting the presence (and/or concentration) of hydrogen in its ambiance. Figure 2 illustrates a fiber Bragg grating based on a fiber 5 having a core 50 for conveying an optical signal, wherein the core 50 is enclosed by a cladding 51. The fiber 5 may be any suitable type of fiber for use in a fiber Bragg grating, and does not per sé have to be of a specific type (although the skilled person may appreciate the potential differences in behavior). The surface coating layer 45 will form an outer casing or exterior casing around the internal cladding 51 of the fiber 5. It may be appreciated that in some exemplary fiber grating sensors 2 useable in the present optical sensor system, the cladding 51 may have been partially or completely removed, e.g. by etching, to form for example an etched-FBG (or the cladding 51 may not be present at all) and the surface coating layer 45 may be present as an external casing in the area of the fiber 5 where the original cladding 51 has been removed. Suppose palladium is used as the material of the coating surface layer 45, then as a result of the presence of any hydrogen in the ambient space around the sensor 2 the mechanic response caused in the surface coating layer 45 will induce strain in the fiber section 40. The strain in fiber section 40 will cause the fiber section 40 to either stretch or compress, and therefore the spatial periodicity of the periodic structure 41 of the fiber Bragg grating 2 will change. This results in a measurable change in the reflected optical wavelength of the fiber grating sensor 2.

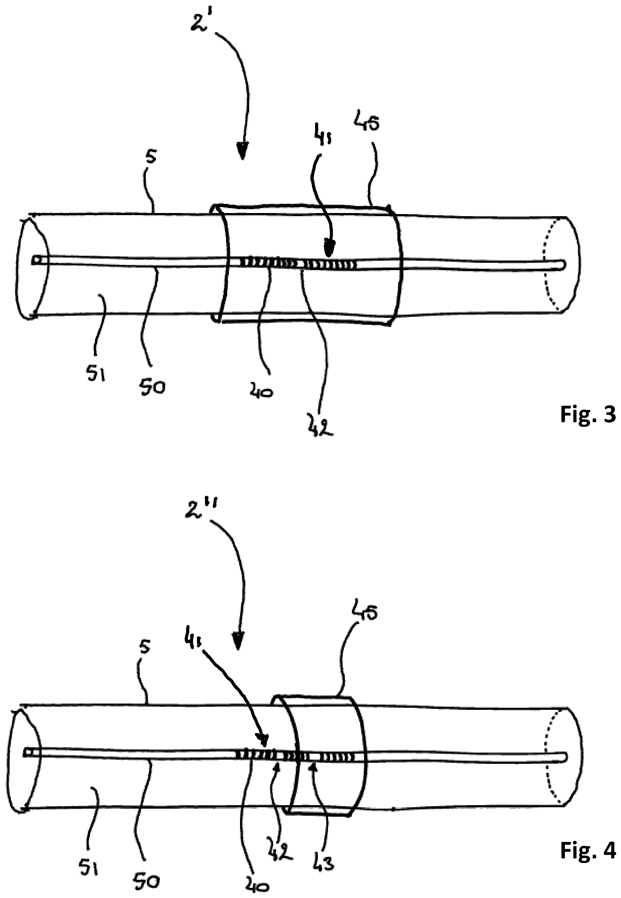

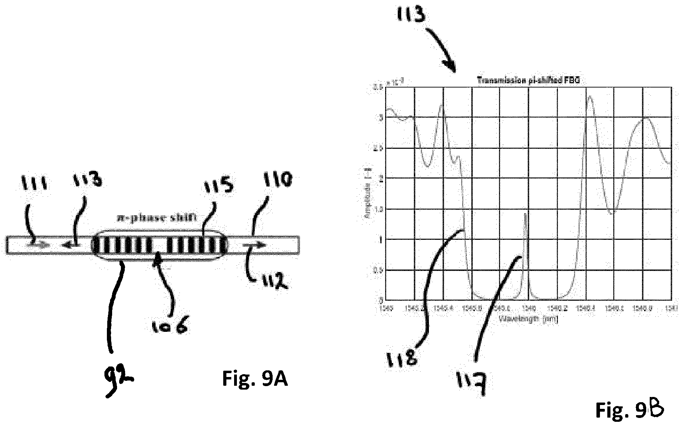

Figure 2 illustrates a fiber Bragg grating configured for reflecting a specific reflection spectrum upon being illuminated with a broadband light source. In a variation, illustrated in figure 3, the fiber grating sensor 2 may be provided by a phase shifted fiber Bragg grating (PS-FBG) 2'. In a phase shifted fiber Bragg grating 2', the structural periodicity 41 is interrupted by a notch 42, e.g. by skipping a part or fraction of a period along the fiber section 40. The result will be that, in addition to reflecting a certain wavelength range, i.e. a reflective spectrum, a very narrow band (e.g. 117 in figure 9B) of wavelengths somewhere in the reflective spectrum is not reflected (or only to a very limited extend). This yields a very small band of wavelengths that is transmitted by the PS-FBG 2', as is for example illustrated in figure 9B. In the example of figure 3, the PS-FBG is a $\pi$ type PS-FBG wherein the narrow band 117 will be in the middle of the reflected spectrum 118 (as explained below with reference to figure 9). The surface coating 45 may be present over the full length of the fiber section 40, or over a small part of it which at least covers the notch 42. The latter is desired in order to optimize the effect of strain, exerted by surface coating layer 45, on the notch 42 such as to shift the wavelength range transmitted (i.e. the narrow transmission peak 117).

In an alternative implementation of the optical sensor system 1, the fiber grating sensor 2 or sensors 2 may comprise one or more double phase shifted FBG's 2", wherein two (or even more) interruptions (otherwise referred to as 'notches') 42 and 43 may be present. An example thereof is illustrated schematically in figure 4. The notches 42 and 43 with different amount of interruptions of the fiber grating sensor 2" of figure 4 will give rise to two narrow transmission peaks, which are missing (or strongly attenuated) in the reflection spectrum 118. In accordance with one variation of the fiber grating sensors 2 described, i.e. this is the alternative fiber grating sensor 2" illustrated in figure 4, the surface coating 45 is present over one of the notches 43, while it is absent over the other notch 42. This will provide the effect of the strain, exerted by surface coating 45, to be exerted on only the notch 43. The other notch 42 will not be affected by the detection of the chemical substance (such as hydrogen), and therefore the wavelength range associated with notch 42 will not shift. On the other hand, suppose the temperature will rise or fall in the ambient space around fiber grating sensor 2", both the wavelength ranges associated with notches 42 and 43 will jointly shift for approximately a same amount. The comparison between the detected wavelength shifts associated with the notches 42 and 43 will thus provide information on both the presence of the chemical substance as well as the temperature. If both will shift in a same direction for a same amount, only the temperature has changed. However, if only the transmission peak associated with notch 43 shifts, this is clearly a result of the presence of the chemical substance. If both peaks associated with notches 42 and 43 will change, but with a different amount (and/or a different direction), then both the detected amount of chemical substance changes while also the temperature changes. From the accurately measured amounts of change in the wavelengths, both parameters can be accurately quantified, hence providing an accurate detector.

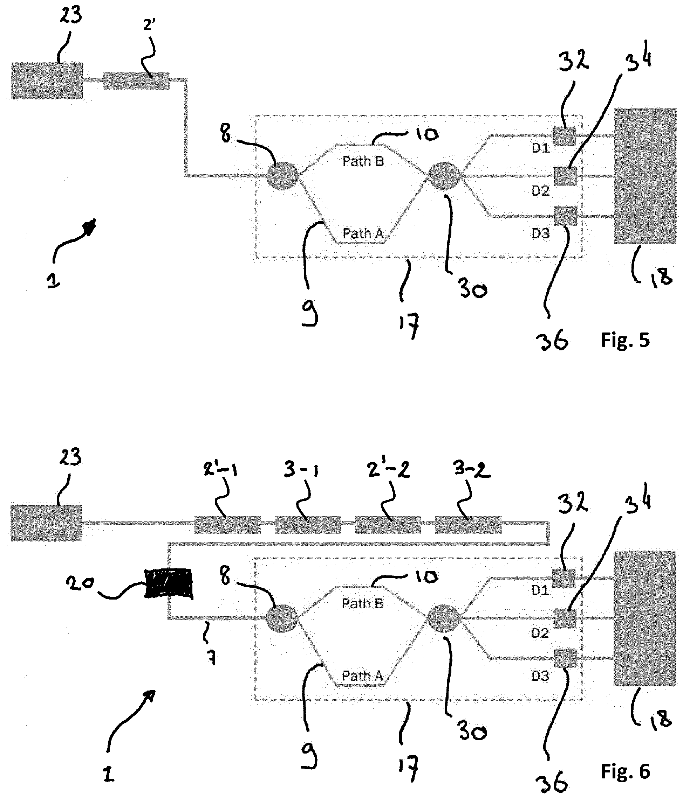

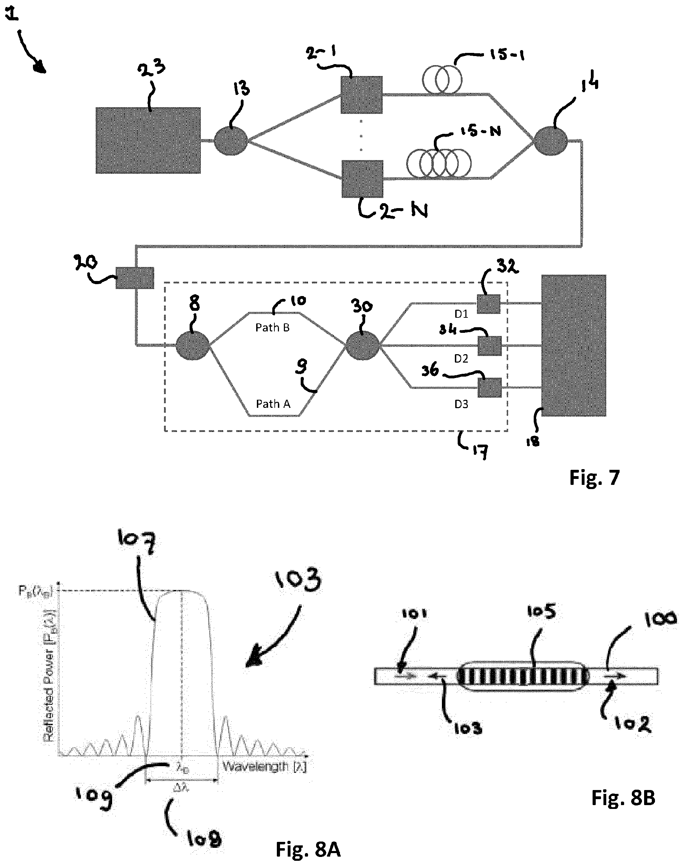

Figure 5 shows a variation of the optical sensor system of figure 1, wherein the fiber grating sensor 2 is provided by a PS-FBG 2' (e.g. such as the PS-FBG of figure 3). The PS-FBG 2 is measured in transmission, having it's output connected to the optical splitter 8 of the interferometer 17. Preferably, although not illustrated in figure 5, a wavelength dependent filter 20 (e.g. as in figure 7) is added to get rid of the transmitted wavelengths that are not used (e.g. outside the reflected spectrum).

Another variant is illustrated in figure 6, wherein a plurality of fiber grating sensors 2'-1, 3-1, 2'-2, 3-2 and 2-4 are connected in series between the broadband optical source 23 and a wavelength dependent filter 20 in front of the optical splitter 8 of the interferometer 17, in the optical sensor system 1. In the variant of figure 6, the fiber grating sensors 2'-1 and 2'-2 may be of the type illustrated in figure 3. The fiber grating sensor 3-1 and 3-2 may be regular fiber Bragg gratings that do not include the surface coating 45. These fiber grating sensor 3-1 and 3-2 may be regular type FBG's, such as illustrated in figure 8B for example. Preferably as in the example of figure 6, phase shifted fiber Bragg gratings 3 (PS-FBG; e.g. al illustrated in figure 9A may be applied) in order for these to be accurately measurable in transmission in the same manner as the coated phase shifted fiber grating sensors 2'-1 and 2'-2. The coated phase shifted fiber grating sensors 2'-1 and 2'-2 enable to detect the presence of the chemical substance, such as to provide a hydrogen sensor for example. The non-coated phase shifted fiber grating sensors 3-1 and 3-2 enable the detection of other ambient parameters, such as temperature or pressure. In figure 6, only two sets of optical fiber grating sensors 2 and 3 (i.e. the combination 2'-1 and 3-1; and the combination 2'-2 and 3-2) are illustrated, however in this manner any desired number of sensors 2, with or without additional sensors 3, may be applied to form a sensor array. Not all of these variants are illustrated, but these variants do form part of the present description of the optical sensor system 1. These include arrays of multiple coated PS-FBG's 2'-1 to 2'-N, arrays of multiple coated regular type FBG's 2-1 to 2-N, arrays of multiple half coated double phase shifted FBG's (such as illustrated in figure 4) 2"-1 to 2'-N, and all of these either solely consisting of the described types of sensors or in combination with regular FBG's 3-1 to 3-N to measure additional parameters.

A further alternative implementation of an optical sensor system 1 is illustrated in figure 7. In this optical sensor system 1, a plurality of parallel connected fiber grating sensors 2-1 to 2-N is illustrated downstream of an optical splitter 13. Each of the downstream parallel fiber connections comprises a delay 15-1 to 15-N, after which an optical combiner 14 combines the optical output signals of each of the fiber grating sensors 2-1 to 2-N. These are transmitted to an optical wavelength filter 20, which may be a selective filter. If for example a broadband optical input signal is provided by broadband optical source 23 at time $t_0$, the signals that are simultaneously transmitted by all fiber grating sensors 2-1 to 2-N are subsequently received at times $t_1$ to $t_N$ at the selective wavelength filter 20. The known delays 15-1 to 15-N associated with each of the fiber grating sensors 2-1 to 2-N introduce a delay of $t_n-t_0$, wherein n is an integer number ranging from 1 to N. Therefore, the selective wavelength filter 20 can be switched subsequently at each time $t_n$ to a wavelength associated with fiber grating sensor 2-n, wherein n is an integer number ranging from 1 to N, in order to subsequently enable the interferometer 17 to analyze each of the optical output signals that was simultaneously transmitted by the fiber grating sensors 2-n. If the grating sensors 2-1 to 2-N operates at a wavelength which is within the bandwidth of the fiber 20. Switching of the wavelength of filter 20 is not required.

The principle of a phase shifted fiber bragg grating is illustrated with reference to figures 8A, 8B, 9A and 9B. In figure 8A, a regular fiber bragg grating 100 is illustrated schematically, with its reflection spectrum illustrated in figure 8B. In regular fiber bragg grating 100, the refractive index of the fiber core is periodically modulated illustrated by modulations 105, acting as a wavelength-selective reflector. When light propagates through the fiber bragg grating 100, it experiences constructive interference at certain wavelengths, causing a significant reflection of those specific wavelengths while allowing other wavelengths to pass through in transmission. In the fiber bragg grating 100, a periodic structure of refractive index modulations 105 therefore causes at least a part of the incoming input signal 101 to be reflected back as reflection signal 103 (assuming the incoming light contains intensity at that specific wavelength). The reflected spectrum of the reflected optical output signal 103 is illustrated in figure 8B. All other wavelengths that are not reflected by the fiber bragg grating 100, will be transmitted as transmission output signal 102. As follows from figure 8B, a narrow wavelength band 107 will be reflected by the FBG 100 in the reflected optical output signal 103. The band 107 has a bandwidth of $\Delta\lambda$ 108 around the bragg wavelength $\lambda_B$. (Note: The bandwidth of the FBG reflection spectrum is in general specified as the FWHM. The FWHM or -3 dB bandwidth is also used to calculate the coherence length of the light which is used to define the OPD of the detection interferometer. Figure 8B refers to $\Delta\lambda$ in the figure instead of FWHM, but for comprehension of the concept it is to be noted that the terms full width at half maximum (FWHM) and $\Delta\lambda$ are interchangeable here. Furthermore, the FHWM of a conventional FBG used for sensing is typically around 100 pm. As discussed herein before the smaller the better for reasons of optical coherence.)

Figure 9A schematically shows a phase shifted fiber bragg grating 110, in particular a $\pi$-shifted fiber bragg grating 110. The phase shifted fiber bragg grating 110, like the regular fiber bragg grating 100, reflects a part of the incoming input signal 111 back as reflected output signal 113, and the rest is transmitted as transmission output signal 112. However, due to the anomaly or notch 106 in the periodic structure of refractive index modulations 115, a very narrow band 117 of wavelengths within the reflected wavelength band 118 of the reflection spectrum is not reflected by the phase shifted fiber bragg grating 110, but is transmitted instead within the transmitted optical output signal 112. This very narrow band 117 of wavelengths is so narrow that it may advantageously be used as output signal of the fiber grating sensor 92 (the equivalent of fiber grating sensor 2). Due to the narrow bandwidth of the transmitted fraction 117 in comparison to the reflection bandwidth 118, a larger coherence length is achieved which allows the optical path difference to become larger. This improves the detectability of small wavelength shifts from the fiber grating sensor 92, because it increases the wavelength-to-phase scale factor of the interferometer 17 without diminishing the interferometric visibility (which would increase the phase noise) in view of the increased coherence length. Note, by the way, that the FWHM of this notch of 25 pm is readily obtainable. Even a notch of 1pm can be manufactured. Therefore the FWHM of 117 can be one to two orders of magnitude smaller than 118.

The present invention has been described in terms of some specific embodiments thereof. It will be appreciated that the embodiments shown in the drawings and described herein are intended for illustrated purposes only and are not by any manner or means intended to be restrictive on the invention. It is believed that the operation and construction of the present invention will be apparent from the foregoing description and drawings appended thereto. It will be clear to the skilled person that the invention is not limited to any embodiment herein described and that modifications are possible which should be considered within the scope of the appended claims. Also kinematic inversions are considered inherently disclosed and to be within the scope of the invention. Moreover, any of the components and elements of the various embodiments disclosed may be combined or may be incorporated in other embodiments where considered necessary, desired or preferred, without departing from the scope of the invention as defined in the claims.

In the claims, any reference signs shall not be construed as limiting the claim. The term 'comprising' and 'including' when used in this description or the appended claims should not be construed in an exclusive or exhaustive sense but rather in an inclusive sense. Thus the expression 'comprising' as used herein does not exclude the presence of other elements or steps in addition to those listed in any claim. Expressions such as "consisting of", when used in this description or the appended claims, should be construed not as an exhaustive enumeration but rather in an inclusive sense of "at least consisting of". Furthermore, the words 'a' and 'an' shall not be construed as limited to 'only one', but instead are used to mean 'at least one', and do not exclude a plurality. Features that are not specifically or explicitly described or claimed may be additionally included in the structure of the invention within its scope. Any of the claimed or disclosed devices or portions thereof may be combined together or separated into further portions unless specifically stated otherwise, without departing from the claimed invention. Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. Additions, deletions, and modifications within the purview of the skilled person may generally be made without departing from the spirit and scope of the invention, as is determined by the claims. The invention may be practiced otherwise then as specifically described herein, and is only limited by the appended claims.

**Claims**

1. Optical sensor system for detection of a chemical substance, the optical sensor system comprising a fiber grating sensor responsive to the chemical substance being present ambient to the fiber grating sensor,

   wherein the fiber grating sensor comprises a fiber section including an internal structural periodicity such as to reflect, upon receiving an optical interrogation signal in use, optical radiation at a reflection wavelength that is dependent on the internal structural periodicity, and

wherein the optical sensor comprises a radiation source for illuminating the fiber grating sensor with an optical interrogation signal, an interferometer, and an optical conveyance structure, wherein the optical conveyance structure is configured for conveying the optical interrogation signal to the fiber grating sensor and for conveying the optical output signal from the fiber grating sensor to the interferometer,

wherein the interferometer is configured for splitting the optical output signal into at least a first signal fraction and a second signal fraction, and wherein the interferometer is configured for conveying the first and second signal fraction such as to establish a path length difference between the first signal fraction and the second signal fraction, and

wherein the interferometer comprises a coupler unit which is configured for combining the first and second signal fraction into a combined interference signal, and for providing the combined interference signal to at least three output ports of the coupler unit, such that each of the at least three output ports thereby provides a respective output signal such as to yield at least three output signals, wherein a fixed mutual phase difference is present between each two output signals of the at least three output signals; and

wherein the fiber grating sensor, for being responsive to said chemical substance, at least at the fiber section including the internal structural periodicity comprises a surface coating forming an exterior casing, the surface coating being of a material that is mechanically responsive to the presence of the chemical substance ambient thereto.

2. Optical sensor system according to claim 1, wherein the fiber grating sensor is a phase shifted type fiber grating sensor wherein the internal structural periodicity comprises an interruption thereof, the interruption being provided by a deviation in at least one structural period, such as to enable the fiber grating sensor to transmit, upon receiving the optical interrogation signal, at least one fraction of the reflected optical radiation, wherein the at least one fraction comprises optical radiation in a transmission spectral bandwidth around a transmission wavelength that corresponds with the interruption.

3. Optical sensor system according to claim 1 or 2, wherein the chemical substance comprises hydrogen and wherein the coating material comprises palladium.

4. Optical sensor system according to any one or more of the preceding claims, wherein the coupler unit comprises a plurality of N output ports, wherein N is an integer number greater than two, the coupler unit being configured for providing the combined signal each of the plurality of N output ports for providing a corresponding number of N output signals, wherein a fixed mutual phase difference is present between each two output signals of the plurality of N output signals.

5. Optical sensor system according to any one or more of the preceding claims, wherein at least one of:
wherein the surface coating has a thickness of at most 300 nanometers; preferably a thickness of at most 200 nanometers; more preferably a thickness of less than 100 nanometers, such as 50 nanometers.

6. Optical sensor system according to any one or more of the preceding claims, wherein the fiber grating sensor, at least at the fiber section including the internal structural periodicity, comprises one or more further coating layers such that the further coating layers and the surface coating together form the exterior casing, each of the one or more further coating layers being of a further material that is mechanically responsive to an ambient parameter.

7. Optical sensor system according to claim 6, wherein the ambient parameter is at least one of a group comprising: temperature, strain, motion energy, vibration energy, pressure, heat, or concentration or presence of the chemical substance or a further chemical substance.

8. Optical sensor system according to claim 3, wherein the coating material comprises a structure suitable for providing an enhanced hydrogen absorption capacity, such as at least one of: a molecular nanostructure, a porous structure, a hydrogen attractive structure or surface.

9. Optical sensor system according to any one or more of the preceding claims, wherein the radiation source is a broadband light source.

10. Optical sensor system according to claim 8, wherein the broadband light source is a mode locked laser, or a broadband light source adapted or configured to provide a frequency comb signal.

11. Optical sensor system according to any one or more of the preceding claims, as far as dependent on claim 2, wherein at least one of:

the internal structural periodicity of the phase shifted fiber grating sensor comprises two or more interruptions, including at least a first interruption in a first position along the fiber section and a second interruption in a second position along the fiber section, such as to enable the phase shifted fiber grating sensor to transmit, upon receiving the optical interrogation signal, at least a first fraction and a second fraction of the reflected optical radiation, the first fraction comprising optical radiation of a first wavelength being associated with the first interruption and the second fraction comprising optical radiation of a second wavelength being associated with the second interruption, and wherein the surface coating is present on the fiber section in the first position and absent on the fiber section in the second position; or

the fiber section comprised by the phase shifted fiber grating sensor is provided by a polarization maintaining optical fiber section, for enabling simultaneous measurement of:

temperature; and
strain, the strain being mechanically induced by the surface coating.

12. Optical sensor system according to any one or more of the preceding claims, wherein the optical sensor system comprises a plurality of fiber grating sensors.

13. Optical sensor system according to claim 12, wherein the surface coating is present on at least one of the fiber grating sensors and absent on at least one further fiber grating sensor of the fiber grating sensors, for enabling, using the at least one further fiber grating sensor, a measurement of temperature independent of the presence of the chemical substance.

14. Optical sensor system according to claim 12 or 13, wherein the plurality of fiber grating sensors form a sensor network, wherein at least one of:
the optical sensor network comprises at least one optical splitter for splitting the optical interrogation signal onto a plurality of optical conveyor branches, wherein each optical conveyor branch comprises one or more fiber grating sensors of the plurality of fiber grating sensors, and wherein each optical conveyor branch has an associated unique branch length for providing a unique branch delay for multiplexing the optical output signals conveyed by the optical conveyor branches in time.

15. Optical sensor system according to any one or more of claims 12-14, wherein each fiber grating sensor of the plurality of fiber grating sensors, is configured for reflecting or transmitting an optical output signal at a unique optical output wavelength, for multiplexing the optical output signals in a wavelength domain.

16. Optical sensor system according to claim 15, wherein the optical sensor system further comprises a wavelength filter for selectively enabling transmission of an optical output signal to the interferometer.

Fig. 1

Fig. 2

Fig. 3

Fig. 4

23

2'

MLL

32   34

8

10

Path B

D1

9

Path A

D2

30

D3

17

1

18

36   **Fig. 5**

23

2'-1   3-1   2'-2   3-2

32   34

MLL

20

8

10

Path B

D1

7

9

Path A

D2

30

D3

17

1

18

36   **Fig. 6**

**Fig. 7**

**Fig. 8A**

**Fig. 8B**

**Fig. 9A**

**Fig. 9B**

| | Europäisches Patentamt European Patent Office Office européen des brevets | **EUROPEAN SEARCH REPORT** | **Application Number** EP 24 17 6391 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CHEN WEIGEN ET AL: "Review of optical fibre sensors for electrical equipment characteristic state parameters detection", HIGH VOLTAGE, THE INSTITUTION OF ENGINEERING AND TECHNOLOGY, MICHAEL FARADAY HOUSE, SIX HILLS WAY, STEVENAGE, HERTS. SG1 2AY, UK, vol. 4, no. 4, 1 December 2019 (2019-12-01), pages 271-281, XP006088098, DOI: 10.1049/HVE.2019.0157 * section 2.1.1; figures 1,10 * | 1-16 | INV. G01D5/353 G01N21/774 G01L1/24 |
| Y | CHEN KAIFENG ET AL: "Review of optical hydrogen sensors based on metal hydrides: Recent developments and challenges", OPTICS AND LASER TECHNOLOGY, ELSEVIER SCIENCE PUBLISHERS BV., AMSTERDAM, NL, vol. 137, 23 December 2020 (2020-12-23), XP086455173, ISSN: 0030-3992, DOI: 10.1016/J.OPTLASTEC.2020.106808 [retrieved on 2020-12-23] * section 7.1 * | 8 | |
| Y | WO 2013/001268 A2 (UNIV STRATHCLYDE [GB]; NIEWCZAS PAWEL [GB]; ORR PHILIP [GB]) 3 January 2013 (2013-01-03) * page 5, line 22 - page 6, line 11; figures 1-3 * | 1-16 | TECHNICAL FIELDS SEARCHED (IPC) G01D G01N G01L |
| Y | CN 105 277 270 B (CHINA PETROLEUM & CHEMICAL; SINOPEC GEOPHYSICAL RES INST) 26 March 2019 (2019-03-26) * paragraphs [0031] - [0033] * | 2 | |

-/--

The present search report has been drawn up for all claims

| Place of search | Date of completion of the search | Examiner |
|---|---|---|
| Munich | 5 December 2024 | Meacher, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**Europäisches Patentamt**
**European Patent Office**
**Office européen des brevets**

# EUROPEAN SEARCH REPORT

Application Number

EP 24 17 6391

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 211 825 681 U (UNIV JILIANG CHINA) 30 October 2020 (2020-10-30) * paragraph [0005] * | 5 | |
| A | ALAIN TROUILLET ET AL: "Fibre gratings for hydrogen sensing", MEASUREMENT SCIENCE AND TECHNOLOGY, IOP, BRISTOL, GB, vol. 17, no. 5, 1 May 2006 (2006-05-01), pages 1124-1128, XP020103504, ISSN: 0957-0233, DOI: 10.1088/0957-0233/17/5/S31 * the whole document * | 1-16 | |
| A | JOHNSON G A ET AL: "FIBER BRAGG GRATING INTERROGATION AND MULTIPLEXING WITH A 3 X 3 COUPLER AND A SCANNING FILTER", JOURNAL OF LIGHTWAVE TECHNOLOGY, IEEE, USA, vol. 18, no. 8, 1 August 2000 (2000-08-01), pages 1101-1105, XP000989387, ISSN: 0733-8724, DOI: 10.1109/50.857755 * the whole document * | 1-16 | |
| A | ORR P ET AL: "High-Speed, Solid State, Interferometric Interrogator and Multiplexer for Fiber Bragg Grating Sensors", JOURNAL OF LIGHTWAVE TECHNOLOGY, IEEE, USA, vol. 29, no. 22, 1 November 2011 (2011-11-01), pages 3387-3392, XP011391686, ISSN: 0733-8724, DOI: 10.1109/JLT.2011.2169044 * the whole document * | 1-16 | |

**TECHNICAL FIELDS SEARCHED (IPC)**

-/--

The present search report has been drawn up for all claims

| Place of search | Date of completion of the search | Examiner |
|---|---|---|
| Munich | 5 December 2024 | Meacher, David |

EPO FORM 1503 03.82 (P04C01)

EUROPEAN SEARCH REPORT

**Application Number**

EP 24 17 6391

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YI JIANG: "Stabilized 3x3-coupler-based interferometer for the demodulation of fiber Bragg grating sensors", OPTICAL ENGINEERING, vol. 47, no. 1, 1 January 2008 (2008-01-01), page 015006, XP055205217, ISSN: 0091-3286, DOI: 10.1117/1.2831129 * the whole document * ----- | 1-16 | |
| Y | RAZZAQ ALAA ET AL: "Transformer oil diagnostic by using an optical fibre system: a review", IET SCIENCE, MEASUREMENT AND TECHNOLOGY, THE INSTITUTION OF ENGINEERING AND TECHNOLOGY, MICHAEL FARADAY HOUSE, SIX HILLS WAY, STEVENAGE, HERTS. SG1 2AY, UK, vol. 13, no. 5, 1 July 2019 (2019-07-01), pages 615-621, XP006085655, ISSN: 1751-8822, DOI: 10.1049/IET-SMT.2018.5076 * page 619, left-hand column * ----- | 11 | |
| Y | ZHANG L ET AL: "In-Fiber Optic Sensors", 1 January 2002 (2002-01-01), 20020101, PAGE(S) 1 - 60, XP002534197, ISBN: 978-0-8247-0732-3 * section "Wavelength-Time Conversion" * ----- | 10 | TECHNICAL FIELDS SEARCHED (IPC) |

The present search report has been drawn up for all claims

| Place of search | Date of completion of the search | Examiner |
|---|---|---|
| Munich | 5 December 2024 | Meacher, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 6391

This annex lists the patent family members relating to the patent documents cited in  the above-mentioned European search report.
The members are as contained in the European Patent Office EDP file on
The European Patent Office is in no way liable for these particulars which are merely given for the purpose of information.

05-12-2024

| Patent document cited in search report | | Publication date | Patent family member(s) | | Publication date |
|---|---|---|---|---|---|
| WO 2013001268 | A2 | 03-01-2013 | EP | 2726824 A2 | 07-05-2014 |
| | | | US | 2014211202 A1 | 31-07-2014 |
| | | | WO | 2013001268 A2 | 03-01-2013 |
| CN 105277270 | B | 26-03-2019 | NONE | | |
| CN 211825681 | U | 30-10-2020 | NONE | | |

EPO FORM P0459

For more details about this annex : see Official Journal of the European Patent Office, No. 12/82